Europäisches Patentamt

European Patent Office

Office européen des brevets

(11) Veröffentlichungsnummer: **0 327 895**
**A2**

## EUROPÄISCHE PATENTANMELDUNG

(21) Anmeldenummer: **89101363.3**

(22) Anmeldetag: **26.01.89**

(51) Int. Cl.⁴: **B23K 26/00**

(30) Priorität: **09.02.88 DE 3803918**

(43) Veröffentlichungstag der Anmeldung:
**16.08.89 Patentblatt 89/33**

(84) Benannte Vertragsstaaten:
**AT BE CH DE ES FR GB IT LI LU NL SE**

(71) Anmelder: **INTERATOM Gesellschaft mit beschränkter Haftung**
**Friedrich-Ebert-Strasse**
**D-5060 Bergisch-Gladbach 1(DE)**

(72) Erfinder: **Neis, Albert**
**Otto-Braun-Strasse 17**
**D-5000 Köln 71(DE)**
Erfinder: **Fehrensen, Herbert**
**Niersteheide 16**
**D-4670 Lünen(DE)**

(74) Vertreter: **Mehl, Ernst, Dipl.-Ing. et al**
**Postfach 22 13 17**
**D-8000 München 22(DE)**

(54) **Auflage mit beweglichen Lamellen zur Halterung von Werkstücken bei Laserschneidgeräten.**

(57) Die vorliegende Erfindung betrifft eine Vorrichtung zur Unterstützung eines im wesentlichen flachen Werkstückes (1) in einer Laserbearbeitungseinrichtung (2), wobei die Vorrichtung eine gitter- oder lamellenartige Struktur (3) mit vielen Auflagestellen (32) aufweist, auf welche ein Werkstück (1) auflegbar ist und von oben mit einem Laserstrahl bearbeitet, insbesondere geschnitten werden kann. Zur Vermeidung von Beschädigungen an der Struktur (3) und vor allem auch zur Vermeidung von Unregelmäßigkeiten an der Unterseite des Werkstückes (1) wird vorgeschlagen, die gitter- oder lamellenartige Struktur (3) aus mehreren beweglichen Teilstrukturen (30), die einzeln versenkbar sind, zusammenzusetzen. Durch eine mit der Laserbearbeitung (2) gekoppelte Mechanik (12, 13) werden jeweils die Teilstrukturen (30) versenkt, die bei der Bearbeitung im Auftreffbereich des Laserstrahles liegen. Vorzugsweise bestehen die Teilstrukturen aus einzelnen Lamellenblechen (30), deren Enden (31) auf Federelementen (7) aufliegen. Mit der vorliegenden Erfindung wird eine höhere Standzeit der Lamellenbleche und eine saubere Bearbeitung der Werkstücke erreicht.

FIG 1

## Auflage mit beweglichen Lamellen zur Halterung von Werkstücken bei Laserschneidgeräten

Die vorliegende Erfindung betrifft eine Vorrichtung zur Unterstützung eines im wesentlichen flachen Werkstückes in einer Laserbearbeitungseinrichtung gemäß dem Oberbegriff des Anspruchs 1, sowie ein Verfahren zur Bearbeitung solcher Werkstücke mittels Laser.

Bei Laserbearbeitungseinrichtungen, insbesondere bei Laserschneidgeräten ist es bekannt, die zu bearbeitenden flachen Werkstücke auf einer gitter- oder lamellenartigen Struktur aufzulegen und von oben den Laserstrahl einwirken zu lassen. Struktur und Laserstrahl können dabei relativ zueinander bewegt werden. Häufig besteht eine solche Struktur aus an ihrer Oberfläche strukturierten Lamellen, welche viele Auflagestellen für das Werkstück aufweisen. Bei den bekannten starren Strukturen läßt es sich jedoch nicht vermeiden, daß der Laserstrahl nach dem Durchdringen des Werkstückes gelegentlich bei seinem Weg auf die Unterstützungsstruktur trifft. Dies führt einerseits zu Schäden an der Struktur, so daß diese nach einer gewissen Zeit ausgewechselt werden muß, und hat andererseits zur Folge, daß Material der aufgeschmolzenen Struktur gegen das Werkstück spritzt und dort an der Unterseite Unregelmäßigkeiten hervorruft, welche ein Nacharbeiten bei Präzisionsteilen nötig machen.

Aufgabe der vorliegenden Erfindung ist daher die Schaffung einer Unterstützungsstruktur, welche die oben genannten Probleme vermeidet, sowie ein entsprechendes Verfahren zur Bearbeitung eines Werkstückes.

Zur Lösung dieser Aufgabe wird eine Vorrichtung mit den kennzeichnenden Merkmalen des Anspruchs 1 vorgeschlagen. Der grundlegende Gedanke ist, die Unterstützungsstruktur aus mindestens zwei beweglichen Teilstrukturen aufzubauen, welche einzeln versenkbar sind. Durch eine mit der Laserbearbeitungseinrichtung gekoppelte Mechanik wird jeweils die Teilstruktur versenkt, die bei der Bearbeitung im Auftreffbereich des Laserstrahles liegt. Eine derartige unterteilte Struktur kann aus ineinanderliegenden Gittern oder auch aus vielen Einzelteilen bestehen, welche entsprechend dem Weg des Laserstrahles jeweils versenkt werden. Sofern nicht eine zu große Fläche des Werkstückes ohne Unterstützung bleibt, ergeben sich keine Nachteile durch Verformung des Werkstückes oder Verringerung der Präzision bei der Bearbeitung, dafür erhöhen sich jedoch Standzeit der Unterstützungsstruktur und Qualität der bearbeiteten Werkstücke.

Vorteilhafte Weiterbildungen der Erfindung werden in den Unteransprüchen beschrieben. So wird gemäß Anspruch 2 vorgeschlagen, daß die Teilstrukturen gegen die Kraft von abstützenden Federelementen versenkbar sein sollen, wobei die Federkräfte nur geringfügig größer als die vom Werkstück auf die Teilstrukturen ausgeübten Kräfte sein sollen. Dies bringt zwei Vorteile mit sich, nämlich einerseits werden nicht unnötig große Kräfte zum Versenken der Teilstrukturen benötigt und andererseits wird eine eventuell geringfügig nach oben überstehende Teilstruktur von dem Werkstück so herabgedrückt, daß immer eine nahezu waagerechte Auflagefläche entsteht. Dabei können gemäß Anspruch 3 die die Teilstrukturen abstützenden Federkräfte einzeln oder gemeinsam einstellbar sein, was eine gute Anpassung an unterschiedliche Werkstücksgewichte, d. h. Materialien und Dicken, ermöglicht.

Eine spezielle Ausführungsform der Erfindung wird im Anspruch 4 angegeben. Die Vorrichtung besteht aus vielen, unabhängigen, etwa parallel angeordneten, flachen, vertikal stehenden Lamellenblechen als Teilstrukturen. Diese sind mit ihren Endbereichen jeweils in Schlitzen eines Tragrahmens geführt, wobei die Endbereiche jeweils vorgespannt auf Federelementen aufliegen und nach oben durch eine Arretierung gehaltert sind. Außerdem ragen die Enden der Lamellenbleche aus den Schlitzen des Tragrahmens heraus, so daß sie von einer Rolle, einem Gleitschuh oder dergleichen herunterdrückbar sind. Dadurch können Rollen oder Gleitschuhe oder dergleichen, die mit der Laserbearbeitungseinrichtung bewegbar sind, jeweils die im Auftreffbereich des Laserstrahls befindlichen Lamellenbleche gegen die Kraft der Federelemente versenken. Ein solcher Aufbau der Unterstützungsstruktur ist relativ einfach und ermöglicht trotz der Versenkung einzelner Lamellenbleche eine hohe Bearbeitungsgeschwindigkeit. Zwar fehlt eine direkte Unterstützung im Auftreffbereich des Laserstrahles, jedoch macht dies bei üblichen Werkstücken keine Schwierigkeiten. Bei sehr dünnen Werkstücken, bei denen eine Durchbiegung wegen fehlender Unterstützung zu befürchten ist, muß ggf. der Abstand der Lamellenbleche entsprechend klein gewählt und die Anzahl der gleichzeitig versenkten Lamellenbleche klein gehalten werden.

Die Ansprüche 5 und 6 geben vorteilhafte Ausgestaltungen für die Federelemente und deren Befestigung an. Nach Anspruch 5 können alle Federelemente oder einzelne Gruppen davon gemeinsam auf mindestens einem Tragrahmen aufliegen, welcher zur Einstellung der Vorspannung der Federelemente gegenüber dem Tragholm vertikal verstellbar ist. Dies ermöglicht eine schnelle genaue Einstellung für veränderte Werkstücksgewichte.

Die Halterung der Federelemente gemäß Anspruch 6, die anhand der Zeichnung näher erläutert wird, ermöglicht ein problemloses Auswechseln der Lamellen mit wenigen Handgriffen und stellt in bezug auf Handhabbarkeit und Arbeitssicherheit eine günstige Lösung für die Halterung der Federelemente dar.

Gemäß Anspruch 7 werden die einzelnen Teilstrukturen durch mit der Laserbearbeitungseinrichtung mitbewegbare Rollen jeweils im Auftreffbereich des Laserstrahles versenkt. Hierbei ist zu beachten, daß die Lage der Achse der Rollen und deren Durchmesser darüber entscheiden, wie groß der nicht unterstützte Bereich des Werkstückes ist und mit welcher Bewegungsgeschwindigkeit die Teilstrukturen versenkt werden. Auch die seitliche Belastung der Teilstrukturen durch die über sie hinweglaufenden Rollen muß berücksichtigt werden. Hier hängt der zu wählende Kompromiß auch von der Bearbeitungsgeschwindigkeit der Maschine ab. Das Zusammenwirken von Rollen und Teilstrukturen kann zu einer beachtlichen Geräuschentwicklung, insbesondere beim Zurückschnellen der Teilstrukturen in ihre Ruhelage führen, was berücksichtigt werden muß. Generell gilt, daß die auftretenden Kräfte und Geräusche um so geringer sind, je größer der Durchmesser der Rollen, daß jedoch der nicht unterstützte Bereich des Werkstückes ebenfalls mit ansteigendem Durchmesser der Rollen größer wird. Gemäß Anspruch 8 wird ein vorteilhafter Kompromiß angegeben.

Das zugehörige Verfahren zur Bearbeitung eines im wesentlichen flachen Werkstückes mittels Laser wird im Anspruch 9 beschrieben. Das Versenken der im Auftreffbereich des Laserstrahls liegenden Teilstrukturen in Abhängigkeit von der Position und Bewegung des Laserstrahles relativ zu der Struktur ist zwar mechanisch aufwendig, jedoch steht dies einer verbesserten Qualität der bearbeiteten Werkstücke und einer erheblich größeren Standzeit der Unterstützungsstruktur gegenüber.

Ein Ausführungsbeispiel der Erfindung ist in der Zeichnung dargestellt, und zwar zeigen:

Figur 1 einen leicht schematisierten Ausschnitt einer erfindungsgemäßen Unterstützungsstruktur, und zwar eine Ansicht von der Seite auf das Ende eines Lamellenblechs mit einem Querschnitt durch Tragrahmen und zugehöriges Federelement und

Figur 2 eine schematisierte Ansicht von außen auf das Ende eines Lamellenbleches und die zugehörige Federeinrichtung.

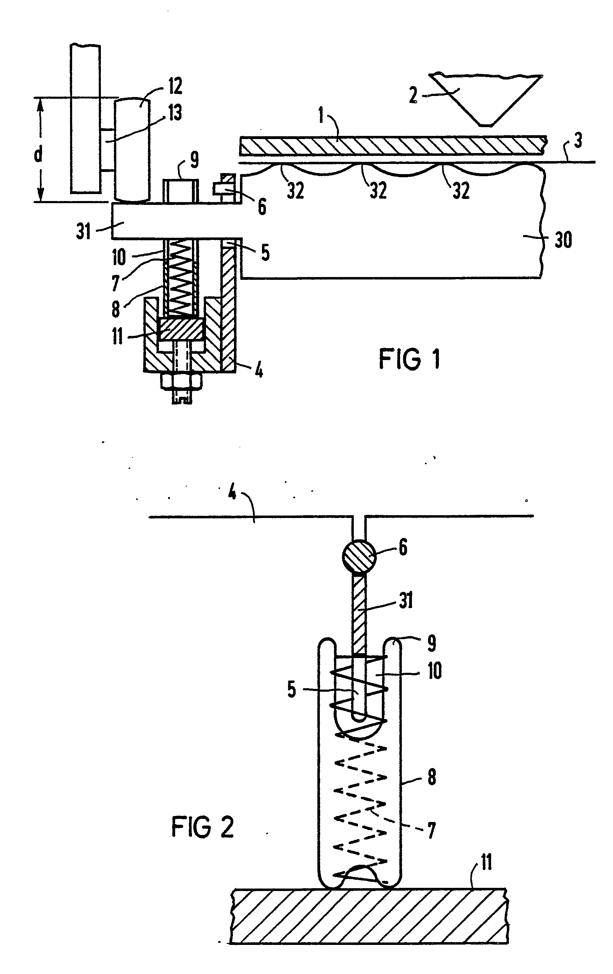

Da das Ausführungsbeispiel der vorliegenden Erfindung eine Modifikation üblicher, aus vielen Lamellenblechen bestehender Auflagen ist, beschränkt sich die Figur 1 auf die Teile der Vorrichtung, die erfindungsgemäß modifiziert wurden. Es sind dies die Enden der Lamellenbleche und deren Halterung. Zunächst zeigt Figur 1 schematisch angedeutet die Lage des Werkstückes 1 auf der Struktur 3 und andeutungsweise den Kopf der Laserbearbeitungseinrichtung 2. Die gesamte Struktur 3 besteht aus vielen Lamellenblechen 30, welche an ihrer Oberseite gewellt oder ähnlich strukturiert sind, wodurch viele Auflagestellen 32 entstehen. Anders als bei der herkömmlichen Anordnung der Lamellenbleche 30 sind im vorliegenden Fall die Enden der Lamellenbleche, von denen eines 31 dargestellt ist, nicht einfach starr in einen Tragrahmen eingehängt. Erfindungsgemäß ist jedes Ende jedes Lamellenbleches 30 in einem Schlitz 5 im Tragrahmen 4 seitlich geführt und nach oben durch eine Arretierung 6 in seiner Bewegung begrenzt. Der Schlitz 5 im Tragrahmen 4 läßt jedoch eine vertikale Bewegung des Lamellenbleches von einigen Zentimetern zu. Weiter liegt das Ende 31 des Lamellenbleches 30 auf einer Schraubenfeder 7 auf, welche ihrerseits in einer Hülse 8 angeordnet ist. Der Hülsenkopf 9 der Hülse 8 weist einen Hülsenschlitz 10 auf, der so bemessen ist, daß er das Ende 31 des Lamellenbleches 30 in seiner vertikalen Bewegung nicht begrenzt. Ferner ist der Hülsenkopf 9 so geformt, daß die Schraubenfeder 7 festgehalten wird, wenn das Lamellenblech 30 nach Entfernung der Arretierung 6 weggenommen wird. Auf diese Weise ist ein leichtes Auswechseln der Lamellenbleche 30 möglich. Die unteren Enden von Schraubenfeder 7 und Hülse 8 liegen auf einem Tragholm 11, welcher zur Anpassung der Federkraft an das Auflagegewicht des Werkstückes 1 gegenüber dem Tragrahmen 4 in seiner Höhe verstellbar ist.

Schließlich ist schematisch noch eine Rolle 12 mit dem Durchmesser d angedeutet, welche mit Hilfe einer nicht dargestellten Mechanik den Bewegungen der Laserbearbeitungseinrichtung folgt. Durch diese Rolle 12 werden jeweils die Lamellenbleche 30 heruntergedrückt, die sich im Auftreffbereich des Laserstrahls der Laserbearbeitungseinrichtung 2 befinden. Von dem Durchmesser d der Rolle 12 und dem Abstand der Rollenachse 13 von den Enden 31 der Lamellenbleche 30 hängt ab, wie tief die einzelnen Lamellenbleche 30 herabgedrückt werden und wie viele Lamellenbleche 30 jeweils gleichzeitig bewegt werden. Statt der Rolle 12 kann auch ein Gleitschuh oder dergleichen verwendet werden, wobei eine Einwirkung entweder auf der Außenseite der Hülse 8 oder aber zwischen Hülse 8 und Tragrahmen 4 erfolgen kann.

Figur 2 zeigt zur Verdeutlichung der räumlichen Verhältnisse nochmals schematisch eine um 90° gedrehte Ansicht in Lamellenrichtung auf das Ende 31 des Lamellenbleches und die zugehörige Hülse 8. Hier wird erkennbar, daß die Formen der Hülse 8 des Hülsenkopfes 9 und des Hülsenschlitzes 10 unkritisch sind, und nur so bemessen sein müssen, daß sie die Feder führen, beim Auswechseln des Lamellenbleches festhalten und die vertikale Bewegung des Lamellenendes 31 nicht behindern. Hierzu können handelsübliche Teile eingesetzt werden. Obwohl durch die vorliegende Erfindung ein Auswechseln der Lamellenbleche 30 wesentlich seltener nötig ist, so bereitet es doch im Bedarfsfall keinerlei Probleme. Es brauchen lediglich die Arretierungen 6 gelöst und die Lamellenbleche nach oben herausgenommen zu werden. Beim anschließenden Einsetzen neuer Lamellenbleche können diese von Hand nach unten gedrückt werden, wobei die Arretierung, vorzugsweise eine Schraube, dann leicht einsetzbar ist.

Die vorliegende Erfindung eignet sich besonders für Laserschneideinrichtungen, mit denen flache Werkstücke bearbeitet werden.

## Ansprüche

1. Vorrichtung zur Unterstützung eines im wesentlichen flachen Werkstückes (1) in einer Laserbearbeitungseinrichtung (2), wobei die Vorrichtung eine gitter- oder lamellenartige Struktur (3) mit vielen Auflagestellen (32) aufweist, auf welcher ein Werkstück (1) auflegbar ist und von oben mit einem Laserstrahl bearbeitet, insbesondere geschnitten werden kann, **gekennzeichnet durch** folgende Merkmale:

a) Die gitter- oder lamellenartige Struktur (3) besteht aus zwei oder mehreren beweglichen Teilstrukturen (30), die einzeln versenkbar sind.

b) Durch eine mit der Laserbearbeitungseinrichtung (2) gekoppelte Mechanik (12, 13) ist (bzw. sind) jeweils zumindest die Teilstruktur(en) (30) versenkbar, die bei der Bearbeitung im Auftreffbereich des Laserstrahles liegt (bzw. liegen).

2. Vorrichtung nach Anspruch 1, **dadurch gekennzeichnet**, daß die Teilstrukturen (30) gegen die Kraft von abstützenden Federelementen (7) versenkbar sind, wobei die Federkräfte so bemessen sind, daß sie nur geringfügig größer sind als die von dem Werkstück (1) auf die Teilstrukturen (30) ausgeübten Kräfte, beispielsweise 10 % bis 30 % größer.

3. Vorrichtung nach Anspruch 2, **dadurch gekennzeichnet**, daß die die Teilstrukturen (30) abstützenden Federkräfte einzeln oder gemeinsam einstellbar sind zur Anpassung an unterschiedliche Werkstücksgewichte.

4. Vorrichtung nach Anspruch 1, 2 oder 3, **gekennzeichnet durch** folgende Merkmale:

a) Die Vorrichtung besteht aus vielen, unabhängigen, etwa parallel angeordneten, flachen, vertikal stehenden Lamellenblechen (30) als Teilstrukturen.

b) Die Lamellenbleche (30) sind mit ihren Endbereichen (31) jeweils in Schlitzen (5) eines Tragrahmens (4) geführt.

c) Die Endbereiche (31) der Lamellenbleche (30) liegen jeweils vorgespannt auf Federelementen (7) auf und sind nach oben durch eine Arretierung (6) gehalten.

d) Die Enden (31) der Lamellenbleche (30) ragen aus den Schlitzen (5) des Tragrahmens (4) heraus, so daß sie von einer Rolle (12), einem Gleitschuh oder dergleichen, herunterdrückbar sind.

e) Es ist eine Rolle (12) ein Gleitschuh oder dergleichen vorhanden, der mit der Laserbearbeitungseinrichtung (2) bewegbar ist und die im Auftreffbereich des Laserstrahles befindlichen Lamellenbleche (30) gegen die Kraft der Federelemente (7) versenkt.

5. Vorrichtung nach Anspruch 4, **dadurch gekennzeichnet**, daß alle oder Gruppen der Federelemente (7) auf mindestens einem gemeinsamen Tragholm (11) aufliegen, welcher zur Einstellung der Vorspannung der Federelemente (7) gegenüber dem Tragrahmen (4) vertikal verstellbar ist.

6. Vorrichtung nach einem der Ansprüche 2 bis 5, **dadurch gekennzeichnet**, daß die Federelemente (7) in Hülsen (8) gehalterte Schraubenfedern (7) sind, wobei die Hülsen (8) die Federn (7) vorzugsweise etwas oberhalb der Ruhelage der Lamellenbleche (30) umklammern (9) und einen Schlitz (10) für die Bewegung des Lamellenendes (31) aufweisen.

7. Vorrichtung nach einem der vorhergehenden Ansprüche, **gekennzeichnet durch** folgende Merkmale:

a) Die Vorrichtung weist zwei mit der Laserbearbeitungseinrichtung (2) mitbewegbare Rollen (12) auf, welche die Teilstrukturen (30) im Auftreffbereich des Laserstrahles versenken.

b) Der Durchmesser (d) und die Lage der Achse (13) der Rollen (12) sind so bemessen, daß einerseits der nicht unterstützte Bereich des Werkstückes (1) klein bleibt, andererseits die Bewegungsgeschwindigkeit der zu versenkenden Teilstrukturen (30) und deren seitliche Belastung bei maximaler Bearbeitungsgeschwindigkeit nicht zu groß wird, insbesondere im Hinblick auf die Geräuschentwicklung der Mechanik.

8. Vorrichtung nach Anspruch 7, **dadurch gekennzeichnet**, daß die Rollen (12) einen Durchmesser (d) vom 3 bis 10fachen des Abstandes der Teilstrukturen (30) haben und ihre Achsen (13) so angeordnet sind, daß sie die Teilstrukturen (30) maximal 1 bis 4 cm, vorzugsweise etwa 2 cm, versenken.

9. Verfahren zur Bearbeitung eines im wesentlichen flachen Werkstückes (1) mittels Laser, insbesondere zum Laserschneiden, wobei das Werkstück auf einer gitter- oder lamellenartigen Struktur (3) mit vielen Auflagestellen (32) aufliegt, **dadurch gekennzeichnet,** daß zumindest die Teile der Struktur (30), die im Auftreffbereich des Laserstrahles liegen, jeweils abhängig von der Position und Bewegung des Laserstrahles bzw. der Struktur versenkt werden.

EP 0 327 895 A2

88 P 6706

FIG 1

FIG 2